Europäisches Patentamt

European Patent Office

Office européen des brevets

(19)

(11) EP 0 852 331 B1

(12) **FASCICULE DE BREVET EUROPEEN**

(45) Date de publication et mention
de la délivrance du brevet:
**26.03.2003 Bulletin 2003/13**

(51) Int Cl.7: **G01K 17/04**

(21) Numéro de dépôt: **97400014.3**

(22) Date de dépôt: **06.01.1997**

(54) **Procédé pour mesurer le coefficient volumique de déperdition thermique d'un local chauffé électriquement**

Verfahren zur Messung des Volumenkoeffizienten von Wärmeverlusten eines elektrisch geheizten Raumes

Method for measuring the volumetric heat loss coefficient of an electrically heated room

(84) Etats contractants désignés:
**AT BE CH DE DK ES FI GB GR IE IT LI LU MC NL PT SE**

(43) Date de publication de la demande:
**08.07.1998 Bulletin 1998/28**

(73) Titulaire: **ELECTRICITE DE FRANCE**
**75008 Paris (FR)**

(72) Inventeur: **Souyri, Michel**
**77810 Thomery (FR)**

(74) Mandataire: **Burbaud, Eric**
**Cabinet Plasseraud**
**84, rue d'Amsterdam**
**75440 Paris Cédex 09 (FR)**

(56) Documents cités:
**FR-A- 860 888        FR-A- 2 506 937**
**FR-A- 2 564 679      FR-A- 2 640 416**
**FR-A- 2 739 931      GB-A- 821 476**

- **FALBE J, REGITZ M: "Römpp-Chemie-Lexikon, 9ième édition, page 4979-4980, Wärmeübertragung", 1992, THIEME VERLAG, STUTTGART, NY**

## Description

La présente invention est relative aux procédés pour mesurer le coefficient volumique de déperdition thermique d'un local chauffé électriquement.

Le local en question est préférentiellement une maison individuelle, mais peut être le cas échéant tout bâtiment notamment à usage d'habitation, ou éventuellement une partie d'un tel bâtiment, par exemple un appartement dans un immeuble à plusieurs étages.

Le coefficient volumique de déperdition thermique G est égal à la puissance de déperdition thermique du local (en watts) par unité de volume de ce local (en m$^3$) et par degré Celsius (ou par Kelvin) d'écart entre la température intérieure du local et la température de l'air extérieur.

Il peut être extrêmement utile de déterminer ce coefficient, pour un local donné, notamment dans les cas suivants :

- après la construction du local, pour vérifier que le constructeur du local a respecté les normes en vigueur ou certains labels de qualité relativement à l'isolation thermique du local, une telle vérification de qualité étant rarement effectuée actuellement,
- en cas de litige entre l'utilisateur du local et le distributeur d'électricité, lorsque l'utilisateur conteste sa facture électrique : dans ce cas, si le distributeur ne constate pas d'erreur dans la facturation électrique, la mesure du coefficient volumique de déperdition thermique du local permet de vérifier si la consommation électrique excessive est due à une mauvaise isolation thermique du local, et d'orienter éventuellement l'utilisateur du local vers des mesures de renforcement de l'isolation thermique et/ou de régulation du chauffage électrique ;
- lorsqu'on envisage une réhabilitation du local, la détermination du coefficient volumique de déperdition thermique permet d'effectuer un diagnostic de l'isolation thermique afin d'évaluer les mesures qu'il convient de prendre en matière d'isolation thermique et/ou de régulation du chauffage.

Il est connu de déterminer le coefficient volumique de déperdition thermique d'un local par des mesures in-situ (FR 2 506 937).

Mais les méthodes de mesure connues sont longues (plusieurs mois), et elles font intervenir un équipement lourd et coûteux.

Par conséquent, en pratique, le coefficient volumique de déperdition thermique d'un local est très rarement mesuré.

Par ailleurs, il existe des logiciels de calcul qui permettent de déterminer ce coefficient, mais d'une part ces logiciels sont relativement lourds à mettre en oeuvre, et d'autre part ils ne donnent qu'un résultat théorique qui ne présente pas l'intérêt d'une mesure in-situ.

L'invention a pour but de proposer un procédé permettant de mesurer rapidement la valeur du coefficient volumique de déperdition thermique d'un local pour un coût modéré, et avec une précision raisonnable, de l'ordre de ± 15 %.

A cet effet, l'invention propose un procédé pour mesurer le coefficient volumique de déperdition thermique d'un local équipé d'un système de chauffage électrique direct (c'est-à-dire un chauffage qui chauffe directement l'espace habitable du local, notamment chauffage à convecteurs ou à radiateurs, à l'exclusion des systèmes à accumulation de chaleur) qui comporte au moins un appareil de chauffage électrique thermostaté, ce procédé incluant une campagne de mesure qui comporte d'une à sept périodes de mesure nocturnes et qui totalise de 6 à 42 heures de mesure, et ce procédé comportant les étapes consistant à :

- régler chaque appareil de chauffage du système de chauffage électrique à une même température de consigne, au moins 48 heures avant le début de la campagne de mesure, et maintenir ce réglage jusqu'à la fin de ladite campagne de mesure,
- chauffer le local exclusivement au moyen du système de chauffage électrique au moins 48 heures avant le début de la campagne de mesure et jusqu'à la fin de ladite campagne de mesure,
- pendant chaque période de mesure, mesurer à intervalles de temps rapprochés l'énergie consommée par le système de chauffage électrique, et mesurer également aux mêmes intervalles de temps rapprochés au moins une température à l'intérieur du local et une température de l'air extérieur, dites températures intérieure et extérieure, ces températures présentant une différence au moins égale à environ 15°C pendant chaque période de mesure,
- et calculer le coefficient de déperdition thermique volumique du local à partir des mesures susmentionnées d'énergie électrique, de température intérieure et de température extérieure.

Ainsi :

- le procédé selon l'invention est rapide à mettre en oeuvre, puisque la durée de la campagne de mesure est au plus de sept jours, et de préférence d'un à trois jours,
- le procédé est simple et peu coûteux à mettre en oeuvre,
- les utilisateurs du local subissent peu de contraintes,
- les mesures sont peu perturbées par les utilisateurs du local, du fait que les périodes de mesure sont nocturnes,
- et la mise en oeuvre du procédé n'implique pas de travaux importants générateurs de nuisances, ni d'intervention électrique complexe.

Dans des modes de réalisation préférés du procédé selon l'invention, on a recours en outre à l'une et/ou à l'autre des dispositions suivantes :

- le coefficient volumique de déperdition thermique calculé est une moyenne de valeurs instantanées correspondant chacune à une mesure particulière, la valeur instantanée pour la n+1$^{ième}$ mesure valant :

$$G_{n+1} = E_{n+1}/(V.\Delta\theta.\Delta t),$$

où :

- . n est un entier naturel,
- . $E_{n+1}$ est l'énergie consommée par le système de chauffage électrique entre les n$^{ième}$ et n+1$^{ième}$ mesures, éventuellement corrigée des apports calorifiques parasites,
- . V est le volume intérieur chauffé du local,
- . $\Delta\theta$ est la différence entre les températures intérieure et extérieure,
- . et $\Delta t$ est la durée séparant les n$^{ième}$ et n+1$^{ième}$ mesures ;

- le système de chauffage électrique est alimenté par deux conducteurs reliés au secteur monophasé, et la mesure de l'énergie consommée par le système de chauffage électrique est réalisée au moyen d'une pince ampèremétrique qui est disposée autour d'un desdits deux conducteurs et qui est reliée à un compteur d'énergie alimenté par ledit secteur monophasé ;
- le local susmentionné est une maison individuelle ;
- chaque période de mesure débute à environ 0 heure et se termine à environ 6 heures du matin ;
- à l'intérieur de chaque période de mesure, les mesures sont séparées les unes des autres par un intervalle de temps constant inférieur à dix secondes ;
- à chaque mesure, la valeur prise en compte pour l'énergie consommée par le système de chauffage électrique est une valeur corrigée pour tenir compte de la chaleur qui est apportée au volume intérieur chauffé du local par des sources calorifiques parasites, cette correction, pour la n+1$^{ième}$ mesure, étant effectuée par la formule :

$$E_{n+1} = EO_{n+1} + A.\Delta t,$$

où :

- · n est un entier naturel,
- · $E_{n+1}$ est la valeur corrigée de l'énergie consommée par le système de chauffage électrique entre les n$^{ième}$ et n+1$^{ième}$ mesures,
- · $EO_{n+1}$ est la valeur brute mesurée de l'énergie consommée par le système de chauffage électrique entre les n$^{ième}$ et n+1$^{ième}$ mesures,
- · A est une valeur moyenne estimée de la puissance calorifique apportée au volume intérieur chauffé du local par les sources calorifiques parasites,
- · et $\Delta t$ est la durée séparant les n$^{ième}$ et n+1$^{ième}$ mesures.

D'autres caractéristiques et avantages de l'invention apparaîtront au cours de la description détaillée suivante d'une de ses formes de réalisation, donnée à titre d'exemple non limitatif, en regard des dessins joints.
Sur les dessins :

- la figure 1 est une vue schématique d'une maison individuelle dont le coefficient volumique de déperdition thermique peut être mesuré conformément à l'invention,
- et la figure 2 est un schéma bloc représentant un dispositif pour mesurer le coefficient volumique de déperdition thermique, selon une forme de réalisation de l'invention.

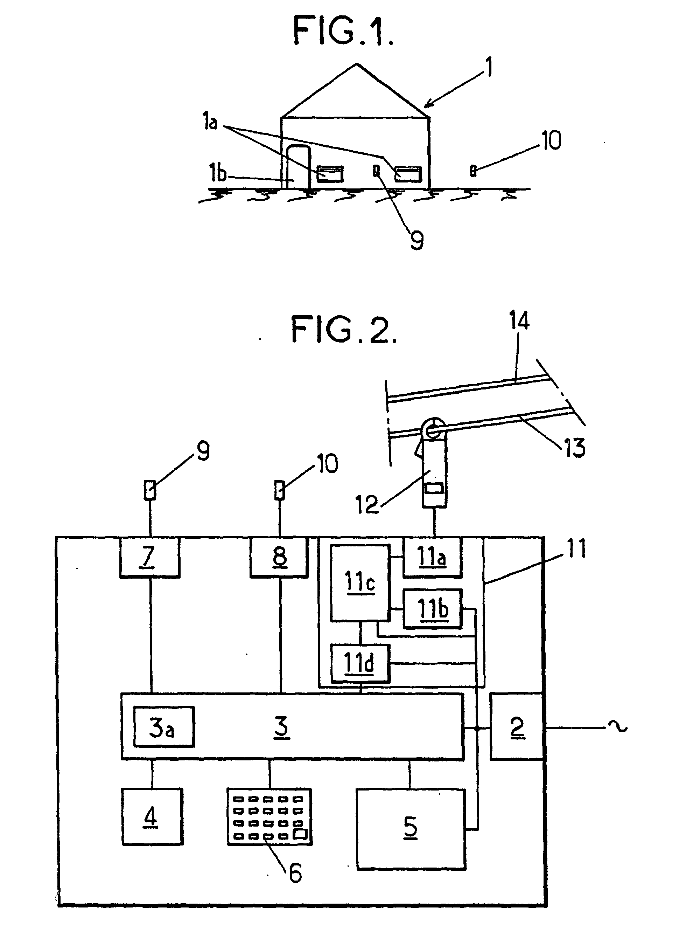

En référence à la figure 1, l'invention a pour but de mesurer le coefficient volumique de déperdition thermique G d'une maison individuelle 1 ou d'un autre local doté d'un système de chauffage électrique qui comporte un ou plusieurs appareils de chauffage électriques thermostatés la. La maison individuelle 1 est alimentée par le réseau public monophasé et le système de chauffage électrique est alimenté à partir d'une paire de conducteurs 13, 14 (figure 2) reliée audit réseau monophasé.
La mesure du coefficient G est effectuée au moyen du dispositif représenté sur la figure 2, pendant une campagne de mesure comportant une ou plusieurs périodes de mesure nocturnes.
Comme représenté sur la figure 2, ce dispositif se présente sous la forme d'un boîtier qui comporte :

- une alimentation 2 qui, en fonctionnement, est reliée au réseau monophasé susmentionné,
- une unité centrale 3 telle qu'un microprocesseur, qui est relié à l'alimentation 2 et qui inclut une horloge 3a (cette horloge peut également constituer un circuit distinct du microprocesseur 3, et relié à celui-ci),
- une mémoire externe 4, reliée au microprocesseur 3,
- un dispositif d'affichage 5 qui est doté d'un écran de contrôle qui est relié au microprocesseur 3 et à l'alimentation 2,
- un panneau de commande 6, ce panneau de commande pouvant être constitué par un clavier ou le cas échéant par l'écran de contrôle du dispositif d'affichage 5 s'il s'agit d'un écran tactile,
- deux interfaces 7, 8 qui communiquent avec le microprocesseur 3 et qui, en fonctionnement, sont connectées respectivement à des sondes de températures 9, 10,

- et un compteur d'énergie 11 qui est relié d'une part à une entrée du microprocesseur 3 et d'autre part à l'alimentation 2 et qui, en fonctionnement, est connecté à une pince ampèremétrique 12 mesurant l'intensité efficace I consommée par le système de chauffage électrique.

Le compteur d'énergie 11 comporte un premier convertisseur analogique-numérique 11a, qui reçoit la mesure d'intensité I effectuée par la pince ampèremétrique 12, et un deuxième convertisseur analogique-numérique llb qui est relié à l'alimentation 2 pour recevoir de celle-ci la valeur de la tension efficace du réseau monophasé.

Les deux convertisseurs analogique-numérique 11a et llb communiquent avec un microprocesseur 11c qui est alimenté par l'alimentation 2 et qui reçoit desdits convertisseurs respectivement la valeur du courant I mesuré par la pince ampéremétrique 12 et de la tension efficace U du réseau monophasé.

Les deux convertisseurs 11a, llb peuvent être intégrés dans le microprocesseur 11c, et peuvent également être remplacés par un convertisseur unique à deux entrées.

Le microprocesseur 11c calcule en permanence le produit UI de ce courant et de cette tension, qui représente la puissance électrique consommée par le système de chauffage électrique.

De plus, le microprocesseur 11c calcule également en permanence l'intégrale du produit U.I par rapport au temps ($\int$U.I.dt), qui représente une énergie électrique consommée par le système de chauffage électrique, et la valeur actuelle de cette intégrale est stockée dans un registre de stockage.

A chaque fois que cette intégrale augmente d'une valeur prédéterminée, par exemple 10 wattheures, le microprocesseur 11c envoie une impulsion électrique vers un relais lld qui est relié audit microprocesseur 11c, à l'alimentation 2, ainsi qu'au microprocesseur 3.

Ainsi, à chaque fois que le système de chauffage a consommé 10 wattheures, le compteur d'énergie 11 envoie une impulsion électrique vers le microprocesseur 3.

A chaque impulsion reçue, le microprocesseur 3 incrémente un registre de comptage d'énergie qui peut être interne ou situé dans la mémoire 4 et qui est initialisé à zéro au début de chaque campagne de mesure : le contenu de ce registre de comptage d'énergie est donc représentatif de l'énergie consommée par le système de chauffage électrique depuis le début de la campagne de mesure.

Avant d'effectuer la mesure du coefficient de déperdition thermique volumique de la maison individuelle en question, on installe le dispositif de mesure comme suit :

- la sonde de température 9 est installée à l'intérieur de la maison,
- la sonde de température 10 est installée à l'extérieur de la maison, pour mesurer la température de l'air extérieur,
- la pince ampèremétrique 12 est disposée autour d'un des deux conducteurs électriques 13, 14 qui alimente le système de chauffage électrique, cette pince ampèremétrique mesurant ainsi l'intensité efficace I qui parcourt le conducteur en question,
- et le boîtier 1 est raccordé au réseau monophasé à l'intérieur de la maison individuelle.

Par ailleurs, au moins 48 heures avant le début de la campagne de mesure du coefficient volumique de déperdition thermique, par exemple de 48 heures à 72 heures avant le début de cette campagne, on règle tous les appareils de chauffage du système de chauffage électrique à une même température de consigne, et on maintient ce réglage jusqu'à la fin de la campagne de mesure. De préférence, le réglage des appareils de chauffage électrique peut être bloqué mécaniquement pour éviter tout déréglage intempestif.

De plus, pendant toute cette période, la maison est chauffée exclusivement au moyen du système de chauffage électrique, c'est-à-dire sans utiliser de chauffages d'appoint tels que des appareils de chauffage portatifs électriques, des cheminées, des chauffages au fioul ou au gaz, etc.

Enfin, avant le début de la campagne de mesure, un opérateur communique des données au microprocesseur 3 par l'intermédiaire du panneau de commande 6, et ces données sont stockées par le microprocesseur 3 dans la mémoire 4.

Ces données peuvent comprendre notamment :

- éventuellement les dates et heures de début et de fin de chaque période de mesure (une à sept périodes de mesure nocturnes totalisant 6 à 42 heures de mesure, et de préférence une à trois périodes de mesure nocturnes totalisant 6 à 18 heures de mesure, chaque période de mesure pouvant débuter notamment à 0 heures et se terminer à 6 heures du matin), ces dates et heures pouvant éventuellement être prédéterminées automatiquement dès la mise en marche de l'appareil,
- le volume intérieur chauffé V de la maison,
- et le cas échéant, si le volume chauffé V contient de sources calorifiques parasites, un nombre A correspondant à une valeur moyenne estimée de la puissance calorifique apportée au volume chauffé V par ces sources parasites.

Les sources calorifiques parasites mentionnées ci-dessus peuvent comprendre notamment les déperditions calorifiques d'un réfrigérateur (1b - figure 2), d'un congélateur, ou d'un chauffe-eau s'ils sont situés dans le volume chauffé.

Pendant chaque période de mesure, le microprocesseur 3 est programmé pour calculer à intervalles de temps rapprochés, par exemple toutes les secondes, une valeur "instantanée" du coefficient G.

Pour cela, le microprocesseur 3 est programmé pour acquérir, à chacune de ces mesures, les valeurs de la température intérieure, de la température extérieure, et de l'énergie totale consommée par le système de chauffage électrique, à partir des interfaces 7, 8 et du registre de comptage d'énergie.

Si la mesure considérée est la n+1$^{\text{ième}}$, le microprocesseur détermine alors l'énergie $EO_{n+1}$ consommée par le système de chauffage électrique - entre les n$^{\text{ième}}$ et n+1$^{\text{ième}}$ mesure, par différence entre d'une part la valeur actuelle de l'énergie totale consommée par le système de chauffage électrique lors de la n+1$^{\text{ième}}$ mesure (donnée par la valeur actuelle du registre de comptage d'énergie), et d'autre part la valeur qu'avait cette énergie totale lors de la n$^{\text{ième}}$ mesure (mémorisée lors de la n$^{\text{ième}}$ mesure).

Cette valeur $EO_{n+1}$ est corrigée par le microprocesseur 3 selon la formule $E_{n+1} = EO_{n+1} + A.\Delta t$ où :

- n est un entier naturel,
- $E_{n+1}$ est la valeur corrigée de l'énergie consommée par le système de chauffage électrique entre les n$^{\text{ième}}$ et les n+1$^{\text{ième}}$ mesures, cette valeur corrigée correspondant sensiblement à l'énergie qui aurait été consommée en l'absence des sources calorifiques parasites,
- et $\Delta t$ est la durée séparant les n$^{\text{ième}}$ et n+1$^{\text{ième}}$ mesures, soit une seconde dans l'exemple considéré.

Le microprocesseur 3 calcule ensuite la valeur instantanée du coefficient de déperdition thermique volumique pour la n+1$^{\text{ième}}$ mesures, par la formule : $G_{n+1} = E_{n+1}/(V.\Delta\theta.\Delta t)$, où $\Delta\theta$ est la différence entre les températures intérieure et extérieure mesurées lors de la n+1$^{\text{ième}}$ mesure, cette différence de température devant rester supérieure à 15°C pendant chaque période de mesure.

De plus, le microprocesseur 3 calcule également la moyenne du coefficient volumique de déperdition thermique sur l'ensemble de la campagne de mesure, et il stocke cette valeur moyenne dans la mémoire 4.

Pour cela, si l'on appelle GO la valeur moyenne du coefficient volumique de déperdition thermique qui était stockée dans la mémoire 4 après la n$^{\text{ième}}$ mesure (initialisée à O au début de la campagne de mesure), la valeur moyenne du coefficient G est calculée lors de la n+1$^{\text{ième}}$ mesure par la formule :

$$G = (n.GO + G_{n+1}) / (n+1).$$

La valeur moyenne du coefficient G est de préférence affichée par le dispositif d'affichage 5, et l'historique de l'évolution de cette valeur moyenne est avantageusement stockée dans la mémoire 4, par exemple en stockant toutes les dix minutes dans cet historique, la valeur moyenne actuelle du coefficient G.

## Revendications

1. Procédé pour mesurer le coefficient volumique de déperdition thermique d'un local (1) équipé d'un système de chauffage électrique direct qui comporte au moins un appareil de chauffage électrique thermostaté (la), ce procédé incluant une campagne de mesure qui comporte d'une à sept périodes de mesure nocturnes et qui totalise de 6 à 42 heures de mesure, et ce procédé comportant les étapes consistant à :

   - régler chaque appareil de chauffage du système de chauffage électrique à une même température de consigne, au moins 48 heures avant le début de la campagne de mesure, et maintenir ce réglage jusqu'à la fin de ladite campagne de mesure,
   - chauffer le local (1) exclusivement au moyen du système de chauffage électrique au moins 48 heures avant le début de la campagne de mesure et jusqu'à la fin de ladite campagne de mesure,
   - pendant chaque période de mesure, mesurer à intervalles de temps rapprochés l'énergie consommée par le système de chauffage électrique, et mesurer également aux mêmes intervalles de temps rapprochés au moins une température à l'intérieur du local et une température de l'air extérieur, dites températures intérieure et extérieure, ces températures présentant une différence au moins égale à environ 15°C pendant chaque période de mesure,
   - et calculer le coefficient volumique de déperdition thermique du local à partir des mesures susmentionnées d'énergie, de température intérieure et de température extérieure.

2. Procédé selon la revendication 1, dans lequel le coefficient volumique de déperdition thermique calculé est une moyenne de valeurs instantanées correspondant chacune à une mesure particulière, la valeur instantanée pour la n+1$^{\text{ième}}$ mesure valant :

$$G_{n+1} = E_{n+1}/(V.\Delta\theta.\Delta t),$$

où :

· n est un entier naturel,

· $E_{n+1}$ est l'énergie consommée par le système de chauffage électrique entre les $n^{ième}$ et $n+1^{ième}$ mesures, éventuellement corrigé des apports calorifiques parasites,
· V est le volume intérieur chauffé du local,
· $\Delta\theta$ est la différence entre les températures intérieure et extérieure,
· et $\Delta t$ est la durée séparant les $n^{ième}$ et $n+1^{ième}$ mesures.

**3.** Procédé selon l'une quelconque des revendications 1 et 2, dans lequel le système de chauffage électrique est alimenté par deux conducteurs (13, 14) reliés au secteur monophasé, et dans lequel la mesure de l'énergie consommée par le système de chauffage électrique est réalisée au moyen d'une pince ampèremétrique (12) qui est disposée autour d'un (13) desdits deux conducteurs et qui est reliée à un compteur d'énergie (11) alimenté par ledit secteur monophasé.

**4.** Procédé selon l'une quelconque des revendications précédentes, dans lequel le local susmentionné est une maison individuelle (1).

**5.** Procédé selon l'une quelconque des revendications précédentes, dans lequel chaque période de mesure débute à environ 0 heures et se termine à environ 6 heures du matin.

**6.** Procédé selon l'une quelconque des revendications précédentes, dans lequel, à l'intérieur de chaque période de mesure, les mesures sont séparées les unes des autres par un intervalle de temps constant inférieur à dix secondes.

**7.** Procédé selon l'une quelconque des revendications précédentes, dans lequel, à chaque mesure, la valeur prise en compte pour l'énergie consommée par le système de chauffage électrique est une valeur corrigée pour tenir compte de la chaleur qui est apportée au volume intérieur chauffé du local (1) par des sources calorifiques parasites (1b), cette correction, pour la $n+1^{ième}$ mesure, étant effectuée par la formule :

$$E_{n+1} = EO_{n+1} + A.\Delta t,$$

où :

· n est un entier naturel,
· $E_{n+1}$ est la valeur corrigée de l'énergie consommée par le système de chauffage électrique entre les $n^{ième}$ et $n+1^{ième}$ mesures,
· $EO_{n+1}$ est la valeur brute mesurée de l'énergie consommée par le système de chauffage électrique entre les $n^{ième}$ et $n+1^{ième}$ mesures,

· A est une valeur moyenne estimée de la puissance calorifique apportée au volume intérieur chauffé du local (1) par les sources calorifiques parasites (1b),
· et $\Delta t$ est la durée séparant les $n^{ième}$ et $n+1^{ième}$ mesures.

**Claims**

**1.** Method for measuring the co-efficient of heat loss per unit volume of a premises (1) equipped with a direct electric heating system which comprises at least one thermostat-controlled electric heating appliance (1a), this method including a measurement programme which comprises one to seven nocturnal measurement periods and totals 6 to 42 hours of measurement, this method comprising the steps consisting in:

- setting each heating appliance of the electric heating system to a same set temperature at least 48 hours before the start of the measurement programme, and maintaining this setting until the end of said measurement programme,
- heating the premises (1) exclusively by means of the electric heating system at least 48 hours before the start of the measurement programme and until the end of said measurement programme,
- during each measurement period measuring the energy consumed by the electric heating system at short intervals of time, and again measuring at the same short intervals of time at least one temperature in the interior of the premises and one temperature of the exterior air, referred to as interior and exterior temperatures, these temperatures exhibiting a difference at least equal to approximately 15° during each measurement period,
- and calculating the co-efficient of heat loss per unit volume of the premises from the measurements mentioned above for the energy, interior temperature and exterior temperature.

**2.** Method according to claim 1, in which the coefficient of heat loss per unit volume calculated is an average of instantaneous values each corresponding to one particular measurement, the instantaneous value for the $n+1^{th}$ measurement being:

$$G_{n+1} = E_{n+1}/(V.\Delta\theta.\Delta t)$$

in which:

· n is a natural integer,
· $E_{n+1}$ is the energy consumed by the electric heating system between the $n^{th}$ and $n+1^{th}$ measurements, possibly corrected for the parasitic heat contributions,

- V is the heated interior volume of the premises,
- $\Delta\theta$ is the difference between the interior and exterior temperatures,

and $\Delta t$ is the time separating the $n^{th}$ and $n+1^{th}$ measurements.

3. Method according to any one of claims 1 and 2, in which the electric heating system is supplied by two conductors (13, 14) connected to the single phase mains power supply, and in which the measurement of the energy consumed by the electric heating system is effected by means of a current-measuring clamp (12) which is disposed around one (13) of said two conductors and connected to an energy consumption meter (11) supplied by said single phase mains power supply.

4. Method according to any one of the preceding claims, in which the premises mentioned above is an individual house (1).

5. Method according to any one of the preceding claims, in which each measurement period starts at approximately 00 hours and ends at approximately 06 hours in the morning.

6. Method according to any one of the preceding claims, in which, within each measurement period, the measurements are separated from one another by a constant interval of time of less than 10 seconds.

7. Method according to any one of the preceding claims, in which, at each measurement, the value taken into account for the energy consumed by the electric heating system is a value which is corrected to take account of the heat which is contributed to the heated interior volume of the premises (1) by parasitic heat sources (1b), this correction, for the $n+1^{th}$ measurement, being effected by the formula:

$$E_{n+1} = EO_{n+1} + A.\Delta t$$

in which:

- n is a natural integer,
- $E_{n+1}$ is the corrected value of the energy consumed by the electric heating system between the $n^{th}$ and $n+1^{th}$ measurements,
- $EO_{n+1}$ is the gross value measured for the energy consumed by the electric heating system between the $n^{th}$ and $n+1^{th}$ measurements,
- A is an average value estimated for the heat contributed to the heated interior volume of the premises (1) by the parasitic heat sources (1b),
- and $\Delta t$ is the time separating the $n^{th}$ and $n+1^{th}$ measurements.

## Patentansprüche

1. Verfahren zur Messung des Volumenkoeffizienten von Wärmeverlusten eines Raums (1), der mit einem direkten elektrischen Heizungssystem ausgestattet ist, welches System zumindest eine elektrische thermostabilisierte Heizvorrichtung (1a) aufweist, wobei das Verfahren eine Messzeit beinhaltet, die zwischen einen und sieben Zeiträume der nächtlichen Messung aufweist und sich auf insgesamt 6 bis 42 Messstunden beläuft, und wobei das Verfahren die folgenden Schritte aufweist:

- Regeln jeder Heizvorrichtung des elektrischen Heizungssystems auf die gleiche Einstelltemperatur, zumindest 48 Stunden vor dem Beginn der Messzeit, und Aufrechterhalten dieser Regelung bis zum Ende der Messzeit,

- Heizen des Raums (1) ausschließlich mittels des elektrischen Heizungssystems für zumindest 48 Stunden vor der Messzeit und bis zum Ende der Messzeit,

- während jedem Messzeitraum, Messen in benachbarten Zeitintervallen, die durch das elektrische Heizungssystem verbrauchte Energie, und Messen in den gleichen Zeitintervallen zumindest einer Temperatur im Inneren des Raums und einer Temperatur der Außenluft, bezeichnet als innere und äußere Temperatur, wobei diese Temperaturen einen Unterschied von zumindest 15°C während jedes Messzeitraums aufweisen,

- und Berechnen des Volumenkoeffizienten der Wärmeverluste des Raums auf der Grundlage der oben genannten Messungen der Energie, der Innentemperatur und der Außentemperatur.

2. Verfahren nach Anspruch 1, wobei der berechnete Volumenkoeffizient der Wärmeverluste ein Mittelwert von Momentanwerten ist, die jeweils einer bestimmten Messung entsprechen, wobei der Momentanwert für die n+erste Messung wie folgt berechnet wird:

$$G_{n+1} = E_{n+1}/(V.\Delta\theta.\Delta t),$$

wobei:

n         eine inganze natürliche ganze Zahl ist,

$E_{n+1}$    die von dem elektrischen Heizungssystem zwischen der nten und n+ersten Messung verbrauchte Energie ist, eventuell korrigiert bezüglich parasitärer Wärmezufuhr,

V         das geheizte innere Volumen des Raums ist,

$\Delta\theta$      der Unterschied zwischen der Innentemperatur und der Außentemperatur ist,

und $\Delta t$   die Dauer ist, die die nte und n+erste Messung voneinander trennt.

3. Verfahren nach einem der Ansprüche 1 und 2, wobei das elektrische Heizungssystem von zwei Leitern (13, 14) gespeist wird, die im einphasigen Stromnetz verbunden sind, und wobei die Messung der vom elektrischen Heizungssystem verbrauchten Energie mittels einer Ampere-Messklemme (12) durchgeführt wird, die um einen (13) der beiden Leiter herum vorgesehen ist und mit einem Energiezähler (11) verbunden ist, der durch das einphasige Stromnetz gespeist wird.

4. Verfahren nach einem der vorangehenden Ansprüche, wobei der genannte Raum ein Einfamilienhaus (1) ist.

5. Verfahren nach einem der vorangehenden Ansprüche, wobei jeder Messzeitraum um ungefähr 0 Uhr beginnt und um ungefähr um 6 Uhr morgens endet.

6. Verfahren nach einem der vorangehenden Ansprüche, wobei im Inneren jedes Messzeitraums die Messungen voneinander um ein konstantes Zeitintervall beabstandet sind, das geringer ist als zehn Sekunden.

7. Verfahren nach einem der vorangehenden Ansprüche, wobei bei jeder Messung der für die durch das elektrische Heizungssystem verbrauchte Energie in Betracht gezogene Wert ein korrigierter Wert ist, um die Wärme in Betracht zu ziehen, die dem inneren geheizten Volumen des Raums (1) durch parasitäre Wärmequellen (1b) zugeführt wird, wobei diese Korrektur für die n+erste Messung durch die folgende Formel durchgeführt wird:

$$E_{n+1} = E0_{n+1} + A.\Delta t,$$

wobei:

n         eine natürliche ganze Zahl ist,

$E_{n+1}$    der korrigierte Wert der durch das elektrische Heizungssystem verbrauchte Energie zwischen der nten und der n+ersten Messung ist,

$E0_{n+1}$   der gemessene Bruttowert der von dem elektrischen Heizungssystem verbrauchten Energie zwischen der nten und der n+ersten Messung ist,

A         ein geschätzter Mittelwert der Wärmeenergie ist, die dem geheizten inneren Volumen des Raums (1) durch die parasitären Wärmequellen (1b) zugeführt wird, und

$\Delta t$       die Dauer ist, die die nte und die n+erste Messung voneinander trennt.

# FIG.1.

# FIG.2.